# EUROPÄISCHE PATENTSCHRIFT

(11) **EP 2 799 268 B1**
(45) Veröffentlichungstag und Bekanntmachung des Hinweises auf die Patenterteilung: **27.04.2016**
(21) Anmeldenummer: 14164633.1
(22) Anmeldetag: 14.04.2014
(51) Int. Cl.: B60J 7/06, H05B 3/34

(54) **Blachenheizung**
Tarpaulin heating
Chauffage de bâche

(30) Priorität: 30.04.2013 CH 8912013
(43) Veröffentlichungstag der Anmeldung: 05.11.2014
(73) Patentinhaber: PartGyx Beteiligungen AG, 4665 Oftringen (CH)
(72) Erfinder: Killer, Thomas, 6300 Zug (CH); Heimann, Robert, 4663 Aarburg (CH); Wicki, Roland, 8957 Spreitenbach (CH)
(74) Vertreter: Frommhold, Joachim

(56) Entgegenhaltungen:
- CN-U- 201 721 296
- DE-A1- 19 906 649
- DE-U1-202011 003 084
- US-A1- 2004 178 657
- US-A1- 2008 246 252

## Beschreibung

Die Erfindung betrifft eine Blachenheizung bzw. eine beheizbare Plane für LKW, Anhänger, Auflieger, Kofferaufbauten oder auch Zeltdächer und dergleichen, umfassend eine formstabil angeordnete Blache oder Plane.

Bei einer Vorrichtung zur Entfernung von Schnee von Dächern wird gemäss DE-A-102006006828 vorgeschlagen, eine glattflächige Plane auf der Dachfläche anzubringen resp. unter den Schnee zu ziehen und den auf der Plane befindlichen Schnee durch Abrutschen von der Dachfläche zu entfernen. Dabei soll die Plane an einem beheizten Rohr befestigt sein um das Ziehen der Plane zu erleichtern. Dieser Vorschlag ist vorrangig für Schräg- resp. Steildächer geeignet.

Aus dem Baugewerbe ist es bekannt, Warmluft mittels eines Gebläses in Bauhüllen einzubringen, siehe zum Beispiel DE-A-102007019112.

Eine beheizbare Plane für LKW ist zum Beispiel aus der DE-U-202011003084 bekannt. Hierbei ist die Plane mit Heizdrähten durchzogen um die Plane zu erwärmen. Vorteilhaft soll der Heizdraht in der Mitte des Planenmaterials eingeschweisst sein, insbesondere bei Materialstärken von ca. 2-3mm. Bei dünnerem Material soll der Heizdraht zwischen zwei Schichten angeordnet sein, die nachfolgend miteinander verschweisst werden. Die Herstellung derartiger Planen ist entsprechend aufwändig und der Heizdraht muss möglichst engmaschig über die gesamte Dachfläche der Plane angeordnet sein. Dies erhöht einerseits den Material- und Arbeitsaufwand und andererseits besteht ein hohes Risiko von Drahtbruch infolge der Planenbewegungen und der unterschiedlichen Ausdehnungskoeffizienten.

Eine weitere Erwärmungseinrichtung für eine LKW-Blache ist in der US 2008246252 A1 offenbart. Diese besteht aus einer Heizmatte, die aussen auf den Dachbereich der Blache aufgezogen wird. Sie wird in den Ecken fixiert und mittels Spannern gehalten. Die Heizdrähte sind beidseitig von Isolationsschichten umgeben, auf die je eine wasserdichte Aussenschicht folgt.

Der Erfindung liegt die Aufgabe zugrunde, eine Blachenheizung resp. eine beheizbare Plane für LKW, Anhänger, Auflieger, Kofferaufbauten oder auch Zeltdächer und dergleichen zu schaffen, die eine einfache und zuverlässige Freihaltung des Dachbereichs der Blache von Eis und Schnee ermöglicht.
Die Aufgabe ist mit den Merkmalen des Patentanspruch 1 gelöst. Erfindungsgemäss ist eine Innenseite einer Deckenfläche der Blache mit mindestens einem Heizelement versehen, das einen schlaufenförmig angeordneten elektrischen Leiter und ein wärmeleitendes bzw. wärmereflektierendes Element umfasst.
Bevorzugte Ausführungsformen sind in den abhängigen Ansprüchen offenbart. Der elektrische Leiter kann ein Silikonheizleiter, ein Heizdraht, ein Infrarotelement oder dergleichen sein, der schlaufenförmig angeordnet ist.

Das wärmereflektierende Element besteht aus einem wärmereflektierenden Material oder Gewebe, bevorzugt aus Metall und ist insbesondere ein Aluminiumwerkstoff resp. eine Aluminiumfolie. Der Heizleiter kann in einer Art Tasche direkt auf der Innenseite der Deckenfläche der Blache angebracht sein, wobei die Innenseite der Tasche durch das wärmereflektierende Element gebildet ist, das mit der Blache verbunden ist, z. B. durch vernähen. Ebenso kann die Deckenfläche der Blache zwei Schichten umfassen, zwischen denen die Heizelemente angeordnet sind. Der elektrische Leiter ist also auf der Blache oder zwischen zwei Schichten der Blache resp. zwischen zwei Blachen angeordnet.
In weiterer Ausgestaltung sind Heizelement und Metallfolie streifenförmig angeordnet um eine möglichst grosse Dachfläche effektiv zu erwärmen.

Diese Anordnung ermöglicht die übliche Verschiebung der Planen ohne Beeinträchtigung der Heizung.

Die Blachenheizung soll vorrangig im Stand, insbesondere über Nacht angewendet werden, so dass auch ein Zugriff auf eine externe Energieversorgung möglich ist. Ein Betrieb während der Fahrt ist möglich.

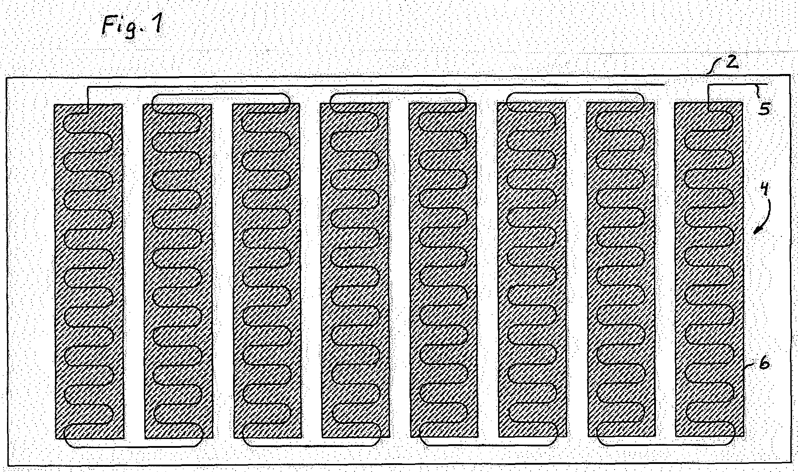

Die Erfindung wird nachfolgend in einem Ausführungsbeispiel anhand einer Zeichnung näher beschrieben. In der Zeichnung zeigen die
- Fig. 1:: eine beispielhafte Anordnung erfindungsgemässer Heizelemente,

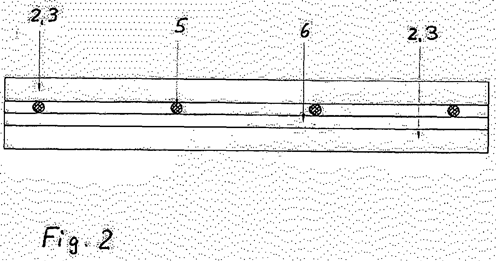

- Fig. 2:: einen Querschnitt durch die Blache,

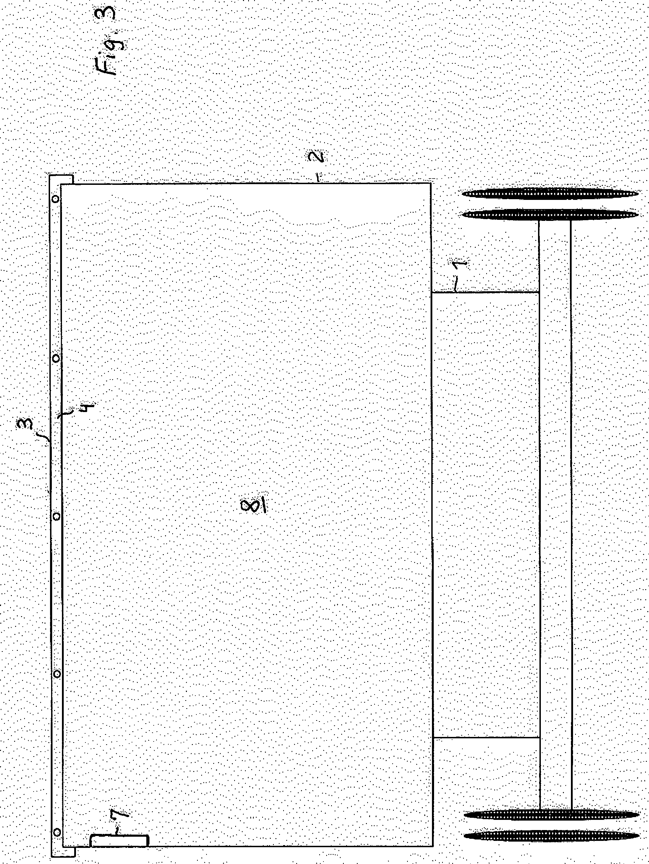

- Fig. 3:: einen vereinfacht dargestellten LKW.

Die Ladefläche eines Sattelaufliegers oder LKW 1 ist mit einer Blache 2, die in einem nicht dargestellten Rahmen formstabil geführt ist, einen Laderaum 8 bildend vollständig eingehaust. Die Blache 2 kann in bekannter Weise harmonikaförmig wie eine Faltjalousie verschoben werden.
Die Innenseite einer Deckfläche 3 der Blache 2 ist erfindungsgemäss mit streifenförmig angeordneten Heizelementen 4 versehen, wobei sich die streifenförmig angeordneten Heizelemente 4 voneinander beabstandet vorrangig quer zur Fahrrichtung erstrecken. Die Heizelemente 4 sind in üblicher Weise miteinander und mit einem Steuergerät 7 elektrisch verbunden.
Jedes Heizelement 4 umfasst einen Silikonheizleiter 5, der in einer Tasche direkt auf der Innenseite der Blache 2 angebracht ist. Die Tasche ist durch eine Aluminiumfolie 6 gebildet, die mit der Blache 2 vernäht ist. Die Tasche kann auch aufgeklebt sein oder dergleichen. Die Erwärmung erfolgt flächendeckend und wird von der reflektierenden Aluminiumfolie 6 verstärkt und auf die Blache 2 gerichtet. Der Betrieb der Heizelemente 4 erfolgt bevorzugt im Stand resp. über Nacht, besonders bevorzugt mittels externer Energieversorgung (Elektronetz oder Dieselgenerator). Bei Schneefall oder gefrierendem Regen kann daher die Bildung einer Schnee- und Eisdecke auf dem Dach der Blache 2 vermieden werden.

Ein Betrieb der Heizelemente 4 während der Fahrt ist bei Bedarf möglich.

### Liste der Bezugszeichen

1 LKW
2 Blache
3 Deckenfläche
4 Heizelement
5 Silikonheizleiter
6 Aluminiumfolie
7 Steuergerät
8 Laderaum

## Patentansprüche

1. Blachenheizung bzw. eine beheizbare Plane für LKW, Anhänger, Auflieger, Kofferaufbauten oder auch Zeltdächer , umfassend eine formstabil angeordnete Blache (2) oder Plane, die in einem Rahmen formstabil geführt ist und einen Laderaum (8) bildet, **dadurch gekennzeichnet, dass** eine Innenseite einer Deckenfläche (3) der Blache (2) mit mindestens einem Heizelement (4) versehen ist, das einen schlaufenförmig angeordneten elektrischen Leiter und ein wärmeleitendes bzw. wärmereflektierendes Element umfasst.

2. Blachenheizung nach Anspruch 1, **dadurch gekennzeichnet, dass** der elektrische Leiter ein Silikonheizleiter (5), ein Heizdraht oder ein Infrarotelement ist.

3. Blachenheizung nach Anspruch 1 oder 2, **dadurch gekennzeichnet, dass** das wärmereflektierende Element eine Metallfolie oder ein Metallgewebe ist.

4. Blachenheizung nach einem der Ansprüche 1 bis 3, **dadurch gekennzeichnet, dass** das Heizelement (4) bevorzugt streifenförmig angeordnet ist und sich vorrangig quer zur Fahrrichtung erstreckt.

5. Blachenheizung nach einem der Ansprüche 1 bis 4, **dadurch gekennzeichnet, dass** mehrere Heizelemente (4) voneinander beabstandet, in Fahrtrichtung nacheinander angeordnet sind.

6. Blachenheizung nach einem der Ansprüche 1 bis 5, **dadurch gekennzeichnet, dass** der Silikonheizleiter (5), Heizdraht oder dergleichen in einer Tasche direkt auf der Innenseite der Deckenfläche (7) der Blache (2) angebracht ist, wobei die Innenseite der Tasche durch das wärmereflektierende Element gebildet ist, das mit der Blache (2) verbunden ist.

7. Blachenheizung nach einem der Ansprüche 1 bis 5, **dadurch gekennzeichnet, dass** zumindest die Deckenfläche (7) der Blache (2) zwei Schichten umfasst, zwischen denen die Heizelemente (5) angeordnet sind.

8. Blachenheizung nach einem der Ansprüche 1 bis 7, **dadurch gekennzeichnet, dass** das wärmereflektierende Element eine Aluminiumfolie (6) oder ein anderes leitfähiges Material ist.

9. Blachenheizung nach einem der Ansprüche 1 bis 4, **dadurch gekennzeichnet, dass** zumindest die Deckenfläche (7) der Blache (2) aus zwei Blachen gebildet ist, zwischen denen die Heizelemente (5) angeordnet sind.

## Claims

1. A cover-sheet heater or a heatable tarpaulin for lorries, trailers, semi-trailers, box bodies or else tent roofs, comprising a dimensionally stably arranged cover sheet (2) or tarpaulin, which is guided in a dimensionally stable manner in a frame and forms a loading space (8), **characterised in that** an inner side of a cover surface (3) of the cover sheet (2) is provided with at least one heating element (4), which comprises an electrical conductor arranged in a looped manner and a heat-conducting or heat-reflecting element.

2. The cover-sheet heater according to claim 1, **characterised in that** he electrical conductor is a silicon heating conductor (5), a heating wire or an infrared element.

3. The cover-sheet heater according to claim 1 or 2, **characterised in that** the heat-reflecting element is a metal film or a metal fabric.

4. The cover-sheet heater according to one of claims 1 to 3, **characterised in that** the heating element (4) is preferably arranged in a striped manner and predominantly extends transversely to the direction of travel.

5. The cover-sheet heater according to one of claims 1 to 4, **characterised in that** a plurality of heating elements (4) are arranged spaced apart from one another, one behind the other in the direction of travel.

6. The cover-sheet heater according to one of claims 1 to 5, **characterised in that** the silicon heating conductor (5), heating wire or the like is attached in a pocket directly on the inner side of the cover surface (7) of the cover sheet (2), wherein the inner side of the pocket is formed by the heat-reflecting element, which is connected to the cover sheet (2).

7. The cover-sheet heater according to one of claims 1 to 5, **characterised in that** at least the cover surface (7) of the cover sheet(2) comprises two layers, between which the heating elements (5) are arranged.

8. The cover-sheet heater according to one of claims 1 to 7, **characterised in that** the heat-reflecting element is an aluminium film (6) or a different conductive material.

9. The cover-sheet heater according to one of claims 1 to 4, **characterised in that** at least the cover surface (7) of the cover sheet (2) consists of two cover sheets, between which the heating elements (5) are arranged.

## Revendications

1. Chauffage de bâche ou bâche chauffable pour des camions, remorques, semi-remorques, structures de coffres ou toits en pavillon, comprenant une bâche (2) disposée de manière à conserver une forme stable, laquelle est insérée dans un cadre de manière à conserver une forme stable et constitue un espace de chargement (8), **caractérisé en ce qu'**une face intérieure d'une surface de plafond (3) de la bâche (2) est pourvue d'au moins un élément chauffant (4) comprenant un conducteur électrique disposé en forme de tube et un élément thermoconducteur ou thermo-réfléchissant.

2. Chauffage de bâche selon la revendication 1, **caractérisé en ce que** le conducteur électrique est un conducteur chauffant en silicone (5), un fil chauffant ou un élément infrarouge.

3. Chauffage de bâche selon la revendication 1 ou 2, **caractérisé en ce que** l'élément thermo-réfléchissant est une feuille métallique ou une toile métallique.

4. Chauffage de bâche selon l'une des revendications 1 à 3, **caractérisé en ce que** l'élément chauffant (4) est agencé de préférence sous forme de bandes et s'étend essentiellement transversalement au sens de marche.

5. Chauffage de bâche selon l'une des revendications 1 à 4, **caractérisé en ce que** plusieurs éléments chauffants (4) sont agencés de façon à être espacés les uns des autres et placés les uns à la suite des autres dans le sens de marche.

6. Chauffage de bâche selon l'une des revendications 1 à 5, **caractérisé en ce que** le conducteur chauffant en silicone (5), le fil chauffant ou autre est fixé dans une poche directement sur la face intérieure de la surface de plafond (7) de la bâche (2), la face intérieure de la poche étant formée par l'élément thermo-réfléchissant, lequel est relié à la bâche (2).

7. Chauffage de bâche selon l'une des revendications 1 à 5, **caractérisé en ce qu'**au moins la surface de plafond (7) de la bâche (2) comprend deux couches, entre lesquelles sont agencés les éléments chauffants (5).

8. Chauffage de bâche selon l'une des revendications 1 à 7, **caractérisé en ce que** l'élément thermo-réfléchissant est une feuille d'aluminium (6) ou un autre matériau conducteur.

9. Chauffage de bâche selon l'une des revendications 1 à 4, **caractérisé en ce qu'**au moins la surface de plafond (7) de la bâche (2) est formée par deux bâches, entre lesquelles sont agencés les éléments chauffants (5).
